# FASCICULE DE BREVET EUROPEEN

(11) **EP 3 414 135 B1**
(45) Date de publication et mention de la délivrance du brevet: **29.01.2020**
(21) Numéro de dépôt: 17702105.2
(22) Date de dépôt: 31.01.2017
(51) Int. Cl.: B60S 1/52, B60S 1/56, G02B 27/00

(54) **DISPOSITIF DE NETTOYAGE D'UN SYSTÈME DE DÉTECTION OPTIQUE D'UN VÉHICULE AUTOMOBILE**
VORRICHTUNG ZUR REINIGUNG EINES OPTISCHEN DETEKTIONSSYSTEMS EINES KRAFTFAHRZEUGS
DEVICE FOR CLEANING AN OPTICAL DETECTION SYSTEM OF A MOTOR VEHICLE

(30) Priorité: 09.02.2016 FR 1650997
(43) Date de publication de la demande: 19.12.2018
(73) Titulaire: Valeo Systèmes d'Essuyage, 78322 Le Mesnil Saint Denis (FR)
(72) Inventeur: CARRION, Julien, 63500 Issoire (FR); CHASSAING, Christophe, 63500 Issoire (FR); KOLANOWSKI, Grégory, 63500 Issoire (FR); MARQUET, Chantal, 63500 Issoire (FR)
(74) Mandataire: Valeo Systèmes d'Essuyage
(86) Numéro de dépôt international: PCT/EP2017/051996
(87) Numéro de publication internationale: WO 2017/137277

(56) Documents cités:
- EP-A1- 2 949 521
- CN-U- 201 923 085
- KR-A- 20110 026 220

## Description

La présente invention se rapporte au domaine de l'aide à la conduite et notamment aux systèmes de détection optique comme des caméras, implantés sur certains véhicules. Plus particulièrement, l'invention a trait à un dispositif de nettoyage d'un tel système de détection optique notamment pour l'aide à la conduite afin que la qualité de l'information fournie au conducteur soit optimale.

On appelle système de détection optique tout système comportant des capteurs optiques, tels que caméras, capteurs laser (communément appelés LIDARS) ou autre capteurs basés sur l'émission et/ ou la détection de la lumière dans le spectre visible ou invisible pour l'homme, en particulier l'infrarouge.

De nos jours, des caméras de vision en particulier arrière équipent un grand nombre des véhicules automobiles actuels, et elles font notamment partie d'un système d'aide au parking qui permet de se garer plus facilement dans un emplacement sans se retourner et de détecter les obstacles situés derrière le véhicule.

On connaît des caméras qui sont installées à l'intérieur de l'habitacle contre la lunette / vitre arrière en visant vers l'arrière depuis la lunette arrière du véhicule. Ces caméras sont bien protégées des influences climatiques extérieures et peuvent par exemple bénéficier des systèmes de dégivrage et de nettoyage de la lunette arrière, par exemple d'un fil chauffant intégré dans la vitre de la lunette arrière.

Cependant, l'angle de vue n'est pas optimal, notamment pour une aide au parking et pour cette raison, on préfère que la caméra soit agencée au niveau du pare-chocs arrière ou au niveau de la plaque d'immatriculation arrière du véhicule.

Dans ce cas, la caméra est donc fortement exposée aux projections de saletés qui peuvent se déposer sur son optique et ainsi réduire son efficacité, voire la rendre inopérante.

En particulier par temps de pluie, on constate des projections de pluie et de saletés qui peuvent grandement affecter l'opérabilité du système de détection optique.

Pour contrer le dépôt de saletés sur la caméra, il est connu d'agencer un dispositif de nettoyage de l'optique de la caméra, généralement un gicleur de liquide de nettoyage, à proximité de celle-ci, pour supprimer les éléments polluants qui se sont déposés au cours du temps.

Le document US2015/0040953 décrit un tel dispositif de nettoyage qui comprend dans un premier mode de réalisation une buse de projection latérale qui peut s'encliqueter sur des protubérances latérales conformées d'un boîtier contenant la caméra. Toutefois, cette solution est trop encombrante et trop visible à l'œil nu pour un utilisateur et nuit à l'esthétisme. De plus, la buse de projection latérale ne peut projeter qu'un liquide de lavage, ce qui peut donner lieu à des traces si des gouttes du liquide de lavage restent sur l'objectif ou la fenêtre de protection de la caméra.

Selon un second mode de réalisation, un dispositif de nettoyage est réalisé sous forme d'une pièce moulée en matière plastique et est assemblé devant la caméra. Cependant, cette pièce moulée qui comporte des canaux internes pour le liquide de lavage, est complexe à fabriquer et onéreuse.

Le document EP 2 949 521 A1 est considéré comme l'état de la technique le plus proche de l'objet de la revendication indépendante 1.

La présente invention se propose de remédier au moins partiellement à un ou plusieurs des inconvénients ci-dessus mentionnés en présentant un dispositif de nettoyage pour système de détection optique alternatif permettant de s'adapter facilement tout en étant peu onéreux et facile à monter.

A cet effet, l'invention a pour objet un dispositif de nettoyage pour un module de capteur optique d'un véhicule automobile comportant un boîtier, un capteur optique logé dans le boîtier caractérisé en ce que le dispositif de nettoyage comprend d'une part une collerette cylindrique présentant des premiers organes d'encliquetage conformés pour coopérer avec des seconds organes d'encliquetage portés par le module de capteur, les premier et second organes d'encliquetage étant configurés de façon qu'à l'état monté, l'axe de la collerette cylindrique est confondue avec l'axe optique du capteur optique, et d'autre part au moins un tuyau présentant des orifices de projection est fixé à la paroi interne de la collerette cylindrique, les orifices de projection étant orientés en direction de l'optique.

Le dispositif de nettoyage selon l'invention peut en outre présenter une ou plusieurs des caractéristiques suivantes prises seules ou en combinaison :
Selon un aspect, les premiers organes d'encliquetage comprennent des rampes adaptées pour coopérer avec une rainure circulaire formant les seconds organes d'encliquetage et ménagée dans un support du module de capteur.

Selon un autre aspect, le dispositif comprend trois premiers organes d'encliquetage répartis régulièrement sur la paroi interne de la collerette cylindrique.

Les premiers organes d'encliquetage sont par exemple réalisés d'une seule pièce avec la collerette cylindrique.

Selon encore un autre aspect, le dispositif comprend un premier et un second tuyaux présentant chacun des orifices de projection et fixés parallèlement l'un par rapport à l'autre contre la paroi interne de la collerette cylindrique, le premier tuyau étant destiné pour projeter un liquide de lavage, le second tuyau étant destiné pour projeter de l'air comprimé.

Le premier et le second tuyaux présentent par exemple des diamètres différents, notamment le second tuyau présente un diamètre plus petit que le premier tuyau.

Ledit au moins un premier tuyau peut être fixé par collage contre la paroi interne de la collerette cylindrique.

Ledit au moins un premier tuyau s'étend par exemple uniquement sur la moitié du pourtour interne de la collerette cylindrique.

L'invention concerne également un module de capteur optique comportant un boîtier, un capteur optique logé dans le boîtier, caractérisé en ce qu'il comprend un dispositif de nettoyage tel que défini ci-dessus.

D'autres avantages et caractéristiques apparaîtront à la lecture de la description de l'invention, ainsi que de l'unique dessin annexé qui montre un schéma simplifié en perspective éclatée et avec un arrachement partiel d'un système de détection optique selon un mode de réalisation.

Les réalisations décrites sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

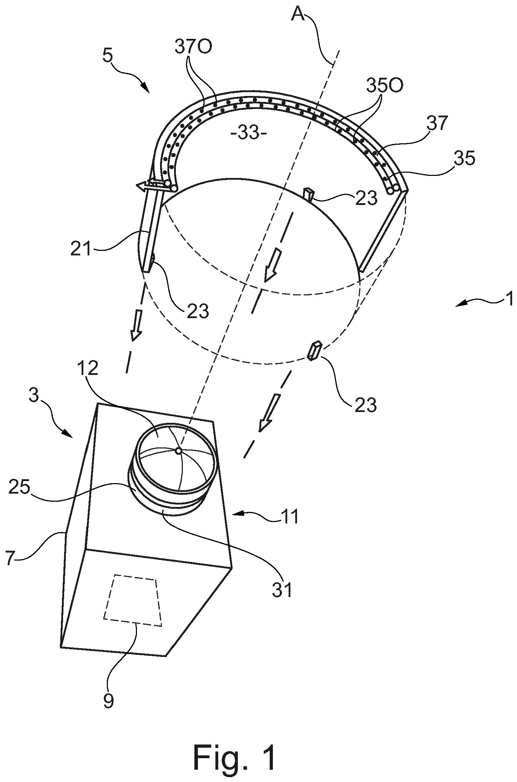

La figure 1 unique montre un mode de réalisation d'un système 1 de détection optique selon l'invention pour un véhicule automobile.

Le système de détection optique 1 est par exemple destiné à être monté à l'arrière d'un véhicule automobile, par exemple au niveau d'un pare-chocs ou d'une plaque d'immatriculation (non représentés). Il peut aussi par exemple être monté sur les côtés du véhicule, par exemple en remplacement des rétroviseurs latéraux.

Le système de détection optique 1 comprend un module de capteur optique 3, en particulier une caméra et un dispositif de nettoyage 5 de l'optique du module de capteur optique 3.

Le module de capteur optique 3, par exemple un module de caméra, comprend un boîtier 7, un capteur optique 9 notamment de prise de vue (dessiné schématiquement en pointillés), logé dans le boîtier 7 et une optique 11, en particulier une vitre de protection 12, disposée devant le capteur 9 et formant au moins une partie de paroi du boîtier 7.

Le boîtier 7 renferme de façon hermétique et étanche le capteur optique.

La vitre de protection 11 peut être en verre ou en polycarbonate cristal.

Le capteur optique 9 est par exemple un capteur CCD (pour « charged coupled device » en anglais à savoir un dispositif à transfert de charge) ou un capteur CMOS composé d'une matrice de photodiodes miniatures. Selon une autre variante, il peut s'agir d'un capteur LIDAR.

L'optique 11 comporte par exemple de plus une lentille convexe (bombée) tel qu'une optique œil de poisson (« fish-eye » en anglais).

De façon générale, l'optique 11 comprend tout élément optique comme par exemple la vitre de protection 12 et une lentille, disposé devant le capteur 9. Dans certaines conditions, il n'y a pas de vitre de protection et cette fonction est assurée par la lentille fixée de façon étanche sur le boîtier 7.

Le capteur optique 9 est installé dans le module 3 de façon à viser au travers ladite vitre de protection 12 le long de son axe optique A.

Le dispositif de nettoyage 5 comprend une collerette cylindrique 21 présentant des premiers organes d'encliquetage 23 conformés pour coopérer avec des seconds organes d'encliquetage associés 25 portés par le module de capteur 3.

Les premier 23 et second 25 organes d'encliquetage sont configurés de façon qu'à l'état monté, l'axe de révolution de la collerette cylindrique 21 est confondu avec l'axe optique A du capteur optique 9.

Comme représenté sur la figure 1, les premiers organes d'encliquetage 23 comprennent par exemple des rampes adaptées pour coopérer avec une rainure circulaire formant les seconds organes d'encliquetage 25 et ménagée dans un support 31 de l'optique 11, par exemple l'objectif, disposé devant le capteur optique 9. Bien entendu, on peut également envisager de former les seconds organes d'encliquetage 25 par trois encoches individuelles au lieu d'une rainure périphérique.

Selon un mode de réalisation, on prévoit que les trois premiers organes d'encliquetage 23 sont répartis de façon régulière sur une paroi interne 33 de la collerette cylindrique 21 pour faciliter le centrage.

Les premiers organes d'encliquetage 23 sont notamment réalisés d'une seule pièce avec la collerette cylindrique 21.

Le dispositif de nettoyage 5 comprend de plus au moins un, dans le présent cas un premier 35 et un second 37 tuyaux présentant chacun des orifices de projection respectivement 350 et 370.

Le premier 35 et le second 37 tuyaux sont fixés parallèlement l'un par rapport à l'autre à la paroi interne 33 de la collerette cylindrique 21, par exemple par collage. Il s'agit par exemple de tuyaux flexibles et souples en caoutchouc. Selon une variante non représentée, on peut utiliser des tuyaux plats et non à diamètre circulaire ce qui permet de faciliter la fixation par collage.

Selon une variante non représentée, on prévoit à l'intérieur fixé sur la paroi interne 33 des crochets disposés de part et d'autre et en quinconce pour fixer des tuyaux 35 et 37 et les retenir en position. Les crochets sont par exemple aussi venus de matière avec la collerette cylindrique 21.

Les deux tuyaux 35 et 37 sont disposés de manière que les orifices de projection 350 et 370 sont orientés en direction de l'optique 11 disposée devant le capteur optique 9.

Le premier tuyau 35 est destiné pour projeter un liquide de lavage et est relié à un réservoir d'un liquide de lavage avec une pompe (non représenté). Le second tuyau 37 est destiné pour projeter de l'air comprimé et est relié à un compresseur d'air (non représenté).

Ainsi, après avoir projeté un liquide de lavage sur l'optique 11, la projection de l'air comprimé permet de chasser des éventuelles gouttes résiduelles et des salissures qui pourraient laisser des traces après séchage.

Pour optimiser d'une part l'encombrement des premier 35 et second 37 tuyaux, ceux-ci présentent des diamètres différents, notamment le second tuyau 37 pour la projection de l'air comprimé présente un diamètre plus petit que le premier tuyau 35 pour le liquide de lavage.

Dans un souci d'économie et aussi d'évacuation du liquide de lavage projeté, les premier 35 et second 37 tuyaux s'étendent uniquement sur la moitié, notamment supérieure, du pourtour interne de la collerette cylindrique 21.

On comprend donc que le dispositif de nettoyage selon l'invention s'adapte très facilement à tout système de détection optique, notamment des systèmes de détection optique existants, pour lesquels il est possible de prévoir de les équiper du dispositif de nettoyage en seconde monte. Il se distingue par un faible coût, peu de pièces et une complexité réduite, tout en permettant un nettoyage efficace de l'optique 11. Il peut être monté et démonté facilement sur un système de détection optique 1, ce qui facilité aussi des actions de maintenance, par exemple en cas de bouchage des premiers 35 ou second 37 tuyaux et/ou des orifices de projection 350 et 370.

## Revendications

1. Dispositif de nettoyage (5) pour un module (3) de capteur optique (9) d'un véhicule automobile comportant un boîtier (7), un capteur optique (9) logé dans le boîtier (7) **caractérisé en ce que** le dispositif de nettoyage (5) comprend d'une part une collerette cylindrique (21) présentant des premiers organes d'encliquetage (23) conformés pour coopérer avec des seconds organes d'encliquetage (25) portés par le module (3) de capteur (9), les premier (23) et second (25) organes d'encliquetage étant configurés de façon qu'à l'état monté, l'axe de la collerette cylindrique (21) est confondue avec l'axe optique (A) du capteur optique (9), et d'autre part au moins un tuyau (35 ; 37) présentant des orifices de projection (35O ; 37O) est fixé à la paroi interne (33) de la collerette cylindrique (21), les orifices de projection (35O ; 37O) étant orientés en direction de l'optique (9).

2. Dispositif de nettoyage selon la revendication 1, **caractérisé en ce que** les premiers organes d'encliquetage (23) comprennent des rampes adaptées pour coopérer avec une rainure circulaire formant les seconds organes d'encliquetage (25) et ménagée dans un support (31) du module (3) de capteur (9).

3. Dispositif de nettoyage selon la revendication 1 ou 2, **caractérisé en ce qu'**il comprend trois premiers organes d'encliquetage (23) répartis régulièrement sur la paroi interne (33) de la collerette cylindrique (21).

4. Dispositif de nettoyage selon l'une quelconque des revendications 1 à 3, **caractérisé en ce que** les premiers organes d'encliquetage (23) sont réalisés d'une seule pièce avec la collerette cylindrique (21).

5. Dispositif de nettoyage selon l'une quelconque des revendications 1 à 4, **caractérisé en ce qu'**il comprend un premier (35) et un second (37) tuyaux présentant chacun des orifices de projection (350, 370) et fixés parallèlement l'un par rapport à l'autre contre la paroi interne (33) de la collerette cylindrique (21), le premier tuyau (35) étant destiné pour projeter un liquide de lavage, le second tuyau (37) étant destiné pour projeter de l'air comprimé.

6. Dispositif de nettoyage selon la revendication 5, **caractérisé en ce que** le premier (35) et le second (37) tuyaux présentent des diamètres différents, notamment le second tuyau (37) présente un diamètre plus petit que le premier tuyau (35).

7. Dispositif de nettoyage selon l'une quelconque des revendications 1 à 6, **caractérisé en ce que** ledit au moins un premier tuyau (35) est fixé par collage contre la paroi interne (33) de la collerette cylindrique (21).

8. Dispositif de nettoyage selon l'une quelconque des revendications 1 à 7, **caractérisé en ce que** ledit au moins un premier tuyau (35) s'étend uniquement sur la moitié du pourtour interne de la collerette cylindrique (21).

9. Module de capteur optique (3) comportant un boîtier (7), un capteur optique (9) logé dans le boîtier (7), **caractérisé en ce qu'**il comprend un dispositif de nettoyage (5) selon l'une quelconque des revendications 1 à 8.

## Patentansprüche

1. Reinigungsvorrichtung (5) für ein Modul (3) eines optischen Sensors (9) eines Kraftfahrzeugs, welches ein Gehäuse (7) aufweist, wobei ein optischer Sensor (9) in dem Gehäuse (7) untergebracht ist, **dadurch gekennzeichnet, dass** die Reinigungsvorrichtung (5) einerseits einen zylindrischen Ring (21) umfasst, der erste Rastorgane (23) aufweist, die dafür ausgebildet sind, mit zweiten Rastorganen (25) zusammenzuwirken, die von dem Modul (3) des Sensors (9) getragen werden, wobei die ersten (23) und zweiten (25) Rastorgane so gestaltet sind, dass im montierten Zustand die Achse des zylindrischen Ringes (21) mit der optischen Achse (A) des optischen Sensors (9) zusammenfällt, und andererseits wenigstens einen Schlauch (35; 37), der Spritzöffnungen (35O; 37O) aufweist und an der Innenwand (33) des zylindrischen Ringes (21) befestigt ist, wobei die Spritzöffnungen (35O; 37O) in Richtung der Optik (9) ausgerichtet sind.

2. Reinigungsvorrichtung nach Anspruch 1, **dadurch gekennzeichnet, dass** die ersten Rastorgane (23) Rampen umfassen, die dafür ausgelegt sind, mit einer kreisförmigen Nut zusammenzuwirken, welche die zweiten Rastorgane (25) bildet und in einer Halterung (31) des Moduls (3) des Sensors (9) ausgebildet ist.

3. Reinigungsvorrichtung nach Anspruch 1 oder 2, **dadurch gekennzeichnet, dass** sie drei erste Rastorgane (23) umfasst, die gleichmäßig auf der Innenwand (33) des zylindrischen Ringes (21) verteilt sind.

4. Reinigungsvorrichtung nach einem der Ansprüche 1 bis 3, **dadurch gekennzeichnet, dass** die ersten Rastorgane (23) mit dem zylindrischen Ring (21) aus einem Stück ausgebildet sind.

5. Reinigungsvorrichtung nach einem der Ansprüche 1 bis 4, **dadurch gekennzeichnet, dass** sie einen ersten (35) und einen zweiten (37) Schlauch umfasst, die jeweils Spritzöffnungen (35O; 37O) aufweisen und parallel zueinander an der Innenwand (33) des zylindrischen Ringes (21) befestigt sind, wobei der erste Schlauch (35) dazu bestimmt ist, eine Waschflüssigkeit zu spritzen, während der zweite Schlauch (37) dazu bestimmt ist, Druckluft auszustoßen.

6. Reinigungsvorrichtung nach Anspruch 5, **dadurch gekennzeichnet, dass** der erste (35) und der zweite (37) Schlauch unterschiedliche Durchmesser aufweisen und insbesondere der zweite Schlauch (37) einen kleineren Durchmesser als der erste Schlauch (35) aufweist.

7. Reinigungsvorrichtung nach einem der Ansprüche 1 bis 6, **dadurch gekennzeichnet, dass** der wenigstens eine erste Schlauch (35) durch Kleben an der Innenwand (33) des zylindrischen Ringes (21) befestigt ist.

8. Reinigungsvorrichtung nach einem der Ansprüche 1 bis 7, **dadurch gekennzeichnet, dass** sich der wenigstens eine erste Schlauch (35) nur auf der Hälfte des Innenumfangs des zylindrischen Ringes (21) erstreckt.

9. Modul (3) eines optischen Sensors, welches ein Gehäuse (7) aufweist, wobei ein optischer Sensor (9) in dem Gehäuse (7) untergebracht ist, **dadurch gekennzeichnet, dass** es eine Reinigungsvorrichtung (5) nach einem der Ansprüche 1 bis 8 umfasst.

## Claims

1. A cleaning device (5) for an optical sensor (9) module (3) of a motor vehicle comprising a housing (7), an optical sensor (9) housed in the housing (7), **characterized in that** the cleaning device (5) comprises a cylindrical flange (21) having first snap-fitting members (23) shaped to engage with second snap-fitting members (25) borne by the sensor (9) module (3), the first (23) and second (25) snap-fitting members being configured in such a way that, in the mounted state, the axis of the cylindrical flange (21) coincides with the optical axis (A) of the optical sensor (9), and at least one pipe (35 ; 37) having spray orifices (350; 370) is fixed to the inner wall (33) of the cylindrical flange (21), the spray orifices (350; 370) being oriented toward the optic (9).

2. The cleaning device as claimed in claim 1, **characterized in that** the first snap-fitting members (23) comprise ramps suitable for cooperating with a circular groove forming the second snap-fitting members (25) and formed in a support (31) of the sensor (9) module (3).

3. The cleaning device as claimed in claim 1 or 2, **characterized in that** it comprises three first snap-fitting members (23) distributed regularly on the inner wall (33) of the cylindrical flange (21).

4. The cleaning device as claimed in any one of claims 1 to 3, **characterized in that** the first snap-fitting members (23) are produced in a single piece with the cylindrical flange (21).

5. The cleaning device as claimed in any one of claims 1 to 4, **characterized in that** it comprises a first (35) and a second (37) pipe each having spray orifices (350, 370) and fixed parallel to one another against the inner wall (33) of the cylindrical flange (21), the first pipe (35) being intended to spray a washing liquid, the second pipe (37) being intended to spray compressed air.

6. The cleaning device as claimed in claim 5, **characterized in that** the first (35) and the second (37) pipes have different diameters, in particular the second pipe (37) has a smaller diameter than the first pipe (35).

7. The cleaning device as claimed in any one of claims 1 to 6, **characterized in that** said at least one first pipe (35) is fixed by gluing against the inner wall (33) of the cylindrical flange (21).

8. The cleaning device as claimed in any one of claims 1 to 7, **characterized in that** said at least one first pipe (35) extends only over half the inner perimeter of the cylindrical flange (21).

9. An optical sensor module (3) comprising a housing (7), an optical sensor (9) housed in the housing (7), **characterized in that** it comprises a cleaning device (5) as claimed in any one of claims 1 to 8.
